# EUROPÄISCHE PATENTSCHRIFT

(11) **EP 1 303 182 B1**
(45) Veröffentlichungstag und Bekanntmachung des Hinweises auf die Patenterteilung: **17.12.2003**
(21) Anmeldenummer: 01969446.2
(22) Anmeldetag: 20.07.2001
(51) Int. Cl.: A01K 1/03

(54) **KÄFIG-REGALSYSTEM MIT ZWANGSBELÜFTUNG**
CAGE RACK SYSTEM WITH FORCED VENTILATION
SYSTEME D'ETAGERES A CAGES A AERATION FORCEE

(30) Priorität: 22.07.2000 DE 10035806
(43) Veröffentlichungstag der Anmeldung: 23.04.2003
(73) Patentinhaber: Deutsches Krebsforschungszentrum Stiftung des öffentlichen Rechts, 69120 Heidelberg (DE)
(72) Erfinder: ZILLMANN, Uwe, 69412 Eberbach (DE); DÄHMEL, Werner, 69250 Schönau (DE); LEHR, Bernd, 69207 Sandhausen (DE)
(74) Vertreter: Weber, Walter, Dipl.-Ing.(FH)
(86) Internationale Anmeldenummer: EP0108383
(87) Internationale Veröffentlichungsnummer: WO02007508

(56) Entgegenhaltungen:
- US-A- 3 924 571
- US-A- 4 528 941

## Beschreibung

Die Erfindung betrifft ein Käfig-Regalsystem mit Zwangsbelüftung, wobei jeder Käfig mit einer Lüftungseinheit in Verbindung steht, welche derart ausgebildet ist, daß die Käfige zur Lüftung im Unter- oder Überdruckbetrieb durchspült werden können und wobei die Lüftungseinheit nur eine Pumpe mit Antrieb aufweist und derart ausgebildet ist, daß eine Förderrichtung in Richtung der Käfige oder aus den Käfigen heraus einstellbar ist.

Derartige Käfig-Regalsysteme dienen einer flexiblen Tierhaltung, wobei ein derartiges Käfig-Regalsystem in der Regel mittels Rollen transportierbar ausgebildet ist. Es kann im Unterdruckbetrieb betrieben werden, um für hygienisch fragliche Tiere Quarantänebedingungen zu schaffen und die Abluft zweckentsprechend zu dekontaminieren. Möglich ist auch ein Überdruckbetrieb für die Haltung von sauberen Tieren, die kein Sicherheitsrisiko darstellen noch aus anderen Gründen einer besonderen Haltung bedürfen.

Ein Käfig-Regalsystem mit zwei Pumpen ist aus dem Firmenprospekt "Einzelbelüftete Käfig-Regalsysteme: IVC-Regalsysteme" der Firma Charles River Deutschland GmbH bekannt. Bei dem dort beschriebenen Käfig-Regalsystem besteht die Lüftungseinheit aus zwei Pumpen mit Antrieben, wobei eine Pumpe dazu dient, die Käfige mit Überdruck zu beaufschlagen und die andere Pumpe dazu, die Luft aus den Käfigen abzusaugen. Dazu besitzen die Käfige zwei Anschlüsse im Deckel, die zur Lüftungseinheit führen, wobei ein Anschluß für die Zuluft und der andere für die Abluft vorgesehen ist. Die Pumpen können gemeinsam oder alternativ betrieben werden, dies erfordert allerdings einen hohen Steuerungsaufwand und eine hohe Pumpenleistung. Bei diesem Käfig-Regalsystem ist die Lüftungseinheit an der Oberseite des Regals angeordnet.

Das vorgenannte Käfig-Regalsystem ist relativ aufwendig, teuer und bezüglich Gewicht und Größe schwer transportierbar, geht nicht in gängige Autoklaven und ist für viele Türen zu hoch. Die Anordnung der sehr schweren Lüftungseinheit an der Oberseite führt zu einem hoch liegenden Schwerpunkt, was wiederum den Transport erschwert. Das Gerät erzeugt im Unter- und Überdruckbetrieb keine effektive Luftströmung in den Käfigen. Der Über- bzw. Unterdruck nimmt bei der Entnahme mehrerer Käfige wegen der offenen Anschlüsse stark ab.

Aus der US 3, 924, 571 ist ein weiteres Käfig-Regalsystem bekannt, das nur eine Pumpe aufweist, jedoch im Umluftbetrieb mit Luftabfuhr und Luftzufuhr für jeden Käfig arbeitet. Die Luftabfuhr geht nach einer Beifügung von Frischluft zu einem Filter und wird dann als Luftzufuhr wieder zu den Käfigen gebracht. Es ist weder ein wahlweiser Über- und Unterdruckbetrieb möglich noch wird eine effektive Frischluftversorgung mit hohem Wirkungsgrad erzielt.

Aus der US 4, 528, 941 ist aus den Figuren 2, 3, 4a, 4b, 4c und 5 sowie aus der zugehörigen Beschreibung ein Käfig-Regalsystem bekannt, das ebenfalls im Umluftsystem arbeitet, wobei nur Filter vorgesehen sind, aber keine Frischluftzufuhr. Auch hier treten die bereits zur US 3, 924, 571 erwähnten Nachteile auf.

Weiterhin ist aus der Figur 1 und der zugehörigen Beschreibung der US 4, 528, 941 ein Käfig-Regalsystem der eingangs genannten Art bekannt. Bei diesem Käfig-Regalsystem ist eine Pumpe vorgesehen, welche mit einer umstellbaren Förderrichtung ausgestattet ist, um Luft aus den Käfigen heraus oder in sie hinein zu fördern. Derartige Pumpen, deren Förderrichtung änderbar ist, weisen jedoch einen schlechteren Wirkungsgrad auf, als Pumpen, die nur in eine Richtung fördern, so daß auch hier keine effektive Frischluftversorgung mit hohem Wirkungsgrad und daher preisgünstig erzielbar ist. Um bei Pumpen mit umstellbarer Förderrichtung eine befriedigende Luftströmung zu erreichen, müßte eine hohe Leistungskapazität bereitgestellt werden, die wie beim erstgenannten Stand der Technik bezüglich des Bauraums groß ist und ein hohes Gewicht sowie einen unangemessen hohen Energieverbrauch aufweist.

Der Erfindung liegt daher die Aufgabe zugrunde, ein Käfig-Regalsystem der eingangs genannten Art derart auszugestalten, daß es einfacher, preisgünstiger, besser handhabund transportierbar ist, sowie einen hohen Wirkungsgrad bei Erzeugung einer befriedigenden Luftströmung aufweist.

Die Aufgabe wird erfindungsgemäß durch ein Käfig-Regalsystem gemäß dem Hauptanspruch gelöst, wobei die Lüftungseinheit derart ausgebildet ist, daß die Käfige wahlweise mit dem Lufteinlaß oder dem Luftauslaß der Pumpe verbindbar sind.

Durch die Erfindung können Aufwand, Kosten, Gewicht und Raumbedarf reduziert werden. Dadurch ist das Käfig-Regalsystem bei der gleichen Anzahl von Käfigen kleiner, leichter und besser transportierbar. Insbesondere lassen sich Radialgebläse verwenden, die zwar nur über eine Förderrichtung verfügen, jedoch einen besonders hohen Wirkungsgrad aufweisen, wodurch bei jeder Betriebsart (Unterdruck- oder Überdruckbetrieb) ein ausreichender Druck für die Erzeugung einer befriedigenden Luftströmung erzielbar ist. Die wahlweise Verbindung mit dem Lufteinlaß oder dem Luftauslaß kann dadurch erfolgen, daß ein Schlauch umgesteckt wird. Es kann jedoch auch eine andere Art und Weise der Umstellung erfolgen, beispielsweise durch entsprechend ausgebildete Betätigungselemente.

Weiterbildungen der Erfindung erhöhen diese Vorteile und die Betriebszuverlässigkeit, vermindern den Aufwand weiter und vermeiden weitere der eingangs erwähnten Nachteile des Standes der Technik.

Eine Weiterbildung sieht vor, daß mindestens eine Verbindungsleitung zwischen der Pumpe und den Käfigen mindestens einen Filter aufweist. Dadurch kann die Zuund/oder Abluft gefiltert werden. Vorzugsweise sind die Filter als Kassettenfilter mit Filterklammern zu Einfügung von Filtermaterial ausgestaltet oder es sind Plattenfilter vorgesehen, bei denen Filtermaterial zwischen zusammenfügbaren Flanschen geklemmt werden kann. Durch solche Ausgestaltungen ist Filtermaterial verwendbar, das lose oder als Meterware erhältlich ist und dadurch sehr preisgünstig ist.

Eine Weiterbildung der Erfindung schlägt dabei vor, daß der Lufteinlaß und der Luftauslaß der Pumpe jeweils mit einer verschließbaren Öffnung zur Außenluft und jeweils mit einem zu den Käfigen führenden Verbindungsleitung verbunden ist, wobei die Verbindungsleitungen jeweils einen Verschluß aufweisen. Die verschließbaren Öffnungen zur Außenluft können beispielsweise mit einem Deckel oder auf andere Weise verschlossen werden. Es können auch zwei Luftweichen vorgesehen sein, die die Verbindungsleitungen wahlweise mit der Pumpe verbinden oder verschließen und gleichzeitig die Pumpe (Luftein- oder -auslaß) mit der Außenluft verbinden. Dabei dienen die Luftweichen als Verschlüsse für die Verbindungsleitungen und gleichzeitig zum Verschließen der Öffnungen zur Außenluft. Es ist jedoch auch möglich, beide Öffnungen zu einem Dreiwegeventil zu führen, das immer eine Öffnung mit der Außenluft verbindet und die andere Öffnung verschließt. Auch für die Verschlüsse der Verbindungsleitungen oder die Betätigung beider Luftweichen kann vorgesehen sein, daß eine Bedieneinheit alle Öffnungen und Absperrungen vornimmt, die für einen Überdruckbetrieb oder einen Unterdruckbetrieb erforderlich sind.

Für einen Überdruckbetrieb wird der Lufteinlaß der Pumpe mit der Außenluft verbunden und die zum Lufteinlaß führende Verbindungsleitung, die von den Käfigen kommt, verschlossen. Die Pumpe fördert dann die Luft über die Verbindungsleitung zwischen dem Luftauslaß der Pumpe und den Käfigen zu letzteren. Für den Unterdruckbetrieb wird der Luftauslaß der Pumpe mit der Öffnung zur Außenluft verbunden und die Verbindungsleitung des Luftauslasses zu den Käfigen verschlossen. Die Pumpe zieht dann die Luft über die Verbindungsleitung des Lufteinlasses zu den Käfigen aus den letzteren heraus. Auf diese Weise ist es möglich, daß die genannten Verbindungen durch die Betätigung von Bedienelementen herstellbar sind.

Die vorgenannte Weiterbildung mit den zwei zumindest teilweise separat verlaufenden Verbindungsleitungen hat auch den Vorteil, daß die Filter an die jeweilige Förderrichtung angepaßt werden können, indem in der jeweiligen Förderrichtung zuerst ein Grobfilter und nachfolgend ein Feinfilter angeordnet ist. Dadurch wird die gegenüber kleinsten Partikeln erforderliche Filterwirkung erzielt und es wird vermieden, daß die Filter zu schnell durch Material verstopft werden. Dadurch wird die Standzeit der Feinfilter wesentlich erhöht.

An der mindestens einen Verbindungsleitung kann ein weiterer Verschluß derart angeordnet sein, daß die Filter durch die Verschlüsse beidseitig vom Leitungssystem trennbar sind. Sind zwei Verbindungsleitungen vorgesehen, so ist es zweckmäßig jeweils einen weiteren Verschluß vorzusehen, um die Filter von den Leitungssystemen zu trennen. Dadurch ist ein leichtes Auswechseln des Filtermaterials auch während des Betriebs der anderen oder auch derselben Leitung möglich, wobei im letzteren Fall diese ohne Abschalten der Pumpe kurzfristig unterbrochen wird.

Die Verbindungsleitungen können derart angeordnet sein, daß sie jeweils zu den Käfigen führen, daß diese also zwei Anschlüsse aufweisen. Zweckmäßigerweise wird jedoch vorgesehen, daß die Verbindungsleitungen in eine gemeinsame, zu den Käfigen führende Leitung münden. Dadurch wird das Leitungssystem wesentlich vereinfacht und es sind die folgenden vorteilhaften Weiterbildungen möglich: Eine besteht darin, daß die gemeinsame Leitung sich in zwei senkrechte Leitungen verzweigt, zwischen denen sprossenartige Querleitungen eingefügt sind, an welchen sich die Anschlüsse für die Käfige befinden. Dadurch wird vermieden, daß durch einen Druckabfall, die im Versorgungsstrang weiter wegliegenden Käfige mit einem wesentlich geringeren Unteroder Überdruck beaufschlagt werden. Weiterhin ist es möglich, daß bei einem Regal, das aus Hohlrohren besteht, diese als gemeinsame Leitungen dienen. Dadurch können separate Leitungen zweier Rohrsysteme eingespart werden. Das Käfig-Regalsystem wird leichter und die stabilen Rohre sind sehr robust, wodurch das System relativ störunanfälliger wird. Es ist dann auch nur ein Anschluß für jeden Käfig erforderlich. Anschlüsse und Trageholme für die Käfige können auch variabel gestaltet werden, so daß Käfige verschiedener Größe angeordnet werden können.

Die Anschlüsse der Käfige an das Lüftungssystem sind vorzugsweise Verschlußkupplungen, wodurch die Käfige jederzeit entfernbar sind, ohne daß der Über- oder Unterdruck durch eine oder mehrere Öffnungen - je nach dem, wie viele Käfige entnommen werden - kollabiert. Alle handelsüblichen Käfige der europäischen und amerikanischen Norm können nachträglich gebohrt und mit einem als Verschlußkupplung gebildeten Anschluß versehen werden.

Die Käfige werden zweckmäßigerweise derart ausgestaltet, daß sie über Filter mit der Außenluft in Verbindung stehen. Dies sollte vor allem dann vorgesehen sein, wenn jeder Käfig nur über einen Anschluß verfügt, über den er mit Unter- oder Überdruck beaufschlagt wird. Bei Überdruckbetrieb entweicht dann die Luft über den Filter des Käfigs und bei Unterdruck wird die Luft durch den Filter in den Käfig gesaugt. Da im letzteren Fall eine eindeutige Luftströmung existiert, sind durch das Käfig-Regalsystem Hygiene als auch Quarantänebedingungen herstellbar. Die Filter werden vorzugsweise als großflächige Deckelfilter ausgebildet, was den Vorteil hat, daß auch bei einem Ausfall der Lüftungseinheit ein gewisser Luftaustausch erhalten bleibt, so daß die Tiere noch im überlebensnotwendigen Maß Luft erhalten. Der Vorteil der Ausgestaltung der Käfige mit nur einem Luftanschluß sowie einem zur Außenluft führenden Filter besteht darin, daß nur eine Luftleitung zu den Käfigen erforderlich ist. Dies ist weniger aufwendig, preisgünstiger und mit einem wesentlich geringeren Druckabfall verbunden, wodurch keine so hohe Leistung von Motor und Pumpe erforderlich ist. Zudem ist die Luftumwälzung im Käfig optimal. Die Filter bestehen zweckmäßigerweise aus zwei durchbrochenen Platten, zwischen die ein Filtermaterial einfügbar ist. Dabei können beliebige Filtermaterialien verwendet werden, beispielsweise preisgünstige Meterware. Zur Einfügung des Filtermaterials kann vorgesehen sein, daß eine der durchbrochenen Platten aufklappbar ausgebildet ist. Vorzugsweise ist die dem Käfig zugewandte Platte als feinmaschiges Gitter ausgebildet und die Durchbrechung der außenliegenden Platte weist einen möglichst hohen Flächenanteil auf. Dadurch ist ein guter Luftaustausch gewährleistet, der auch beim Ausfall der Lüftungseinheit ausreicht. Das feinmaschige Gitter hat den Vorteil, daß das Filtermaterial nicht von in dem Käfig befindlichen Nagetieren zerfressen werden kann.

Eine vorteilhafte Ausbildung sieht vor, daß die Käfigdeckel der Käfige zwei Durchbrechungen aufweisen, wobei an der Käfiginnenseite einer Durchbrechung ein Futtersilo und an die andere Durchbrechung ein Flaschensilo angefügt ist, und daß die Durchbrechungen durch Deckel verschließbar sind. Da ein derartiges Futtersilo und ein derartiges Flaschensilo wesentlich weniger Deckelfläche in Anspruch nehmen als die bisher gebräuchlichen Raufen, welche als relativ große Körbe ausgebildet waren, steht die größere verbleibende Deckelfläche für den Deckelfilter zur Verfügung. Dadurch ist dessen großflächige Ausbildung möglich, wodurch auch beim Pumpenausfall ein überlebensnotwendiger Luftaustausch erhalten bleibt und beim Normalbetrieb der Druckverlust wesentlich herabgesetzt ist. Auf diese Weise ist eine gute Belüftung und Eliminierung biogener Gase bei relativ geringer Leistung von Motor und Pumpe möglich.

Die vorgeschlagene Anordnung eines Futtersilos und eines Flaschensilos hat jedoch noch weitere Vorteile: Sie sind wesentlich schneller zugänglich als Raufen und die Tiere können bei Futternachfüllung oder Flaschenauswechslung nicht entweichen, es kann auch nicht so leicht etwas in den Käfig fallen. Innerhalb des Käfigs steht den Tieren mehr Raum zu Verfügung und es wurde festgestellt, daß diese den zur Verfügung stehenden Raum, auch den zwischen Futtersilo und Flaschensilo, nutzen und gerne an den Silos herumklettern. Diese zusätzliche Aktivitätsmöglichkeit trägt neben dem größeren Lebensraum zum Wohlbefinden der Tiere bei. Die Deckel zur Abdeckung der Durchbrechungen können als Metalldeckel mit einem konischen, dicht schließenden Sitz ausgebildet sein, wodurch zusätzliche Dichtungen vermieden werden und die Autoklavierbarkeit gewährleistet ist.

Um die Füllmenge gut überprüfen zu können, wird vorgeschlagen, daß das Futtersilo und das Flaschensilo sichtbar an einer Stirnseite der Käfige angeordnet sind, vorzugsweise die übliche Anordnung, rechts das Futter und links die Flasche. Vorteilhafterweise ist das Flaschensilo für eine senkrechte Flaschenpositionierung ausgebildet, wobei die Ausgestaltung des Flaschensilos derart mit den einzufügenden Flaschen abgestimmt ist, das letztere im Bereich ihres nach oben zeigenden Bodens ergriffen werden können. Dadurch sind die Flaschen leicht auswechselbar.

Die Käfigdeckel können in ihrem Auflagebereich eine umlaufende Dichtung aufweisen, so daß kein unkontrollierter, nicht durch den Filter gehender Luftaustausch möglich ist.

Die Lüftungseinheit wird zweckmäßigerweise im unteren Bereich des Regals angeordnet, wodurch ein tiefliegender Schwerpunkt erzielbar ist, der Standfestigkeit und sichere Transportierbarkeit begünstigt. Um exakte Unter- oder Überdrücke einstellen zu können, wird vorgeschlagen, daß die Lüftungseinheit mit mindestens einem Regulierventil ausgestattet ist. Weiterhin kann mindestens ein Anzeigeelement vorgesehen sein, beispielsweise eine Druckanzeige, sowic weitere Anzeigevorrichtungen, beispielsweise eine grüne Leuchtdiode, die den Betrieb des Motors mit der Pumpe anzeigt, sowie eine rote Leuchtanzeige, um dem Bedienpersonal Störungen mitzuteilen.

Selbstverständlich läßt sich die erfindungsgemäße Maßnahme auf verschiedenste Weise ausgestalten. Auch ist es möglich, sie mit weiteren Maßnahmen zu kombinieren, um die genannten Vorteil noch zu verbessern oder weitere hinzuzufügen.

Die Erfindung wird nachfolgend anhand von in der Zeichnung dargestellten Ausführungsbeispielen erläutert. Es zeigen
- **Fig. 1**: ein erstes Ausführungsbeispiel des Käfig-Regalsystems im Überdruckbetrieb,
- **Fig. 1a**: die Lüftungseinheit dieses Ausführungsbeispiels im Unterdruckbetrieb,
- **Fig. 2**: eine weitere Ausführungsform der Lüftungseinheit,
- **Fig. 2a**: eine Teilansicht einer alternativen Ausführungsform
- **Fig. 3**: eine Ausgestaltungsmöglichkeit eines Käfigs mit Filter,
- **Fig. 3a**: eine Ausgestaltung eines Käfigdeckels mit Filter und
- **Fig. 3b**: eine weitere Ausgestaltung.

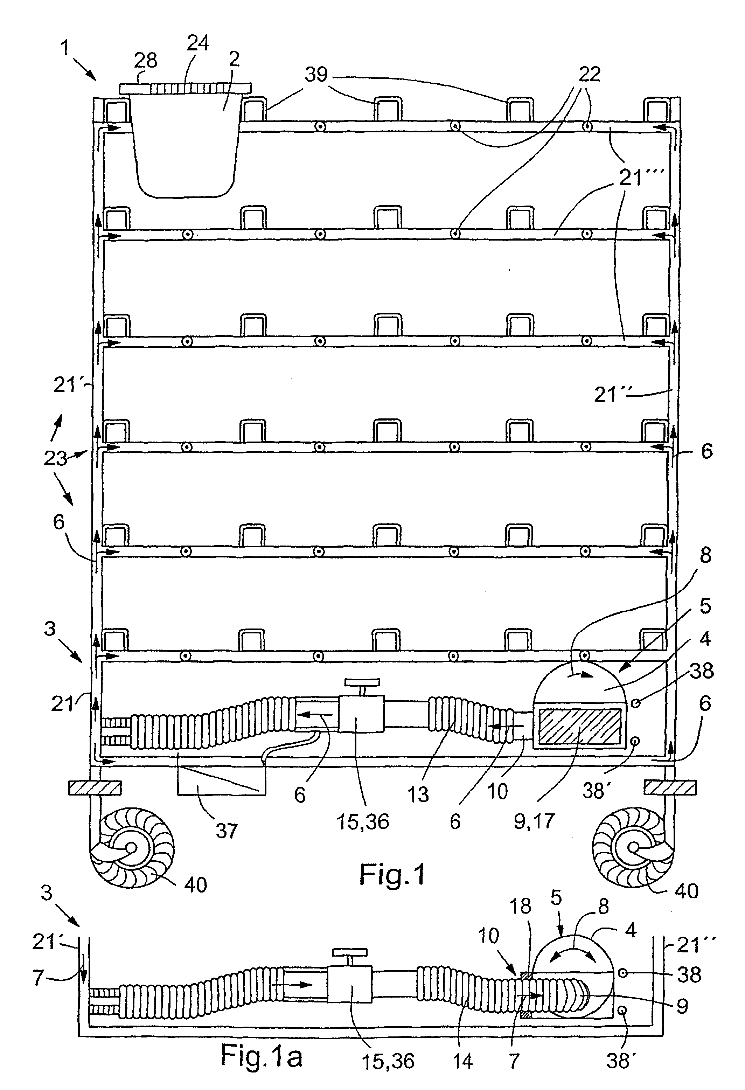

**Fig. 1** zeigt ein erstes Ausführungsbeispiel des Käfig-Regalsystems 1 im Überdruckbetrieb. Das Käfig-Regalsystem 1 besteht aus einem Regal 23, welches mittels Rädern 40 verschoben werden kann. In dem Regal 23 sind auf Trägerholmen 39 Käfige 2 anordenbar, wobei beispielhaft ein Käfig 2 dargestellt ist. Das Regal 23 verfügt über Anschlüsse 22 für die Käfige 2, wobei die Gegenstücke dieser Anschlüsse 22 an den Käfigen 2 angebracht sind. Bei diesen Anschlüssen handelt es sich um Verschlußkupplungen, welche öffnen, sobald ein Käfig 2 eingefügt wird und welche schließen, wenn ein Käfig 2 wieder entfernt wird. Die Anschlüsse 22 münden in Querleitungen 21''', die Teil einer gemeinsamen Leitung 21, welche dem Über- und dem Unterdruckbetrieb dient, sind. Die gemeinsame Leitung 21, 21', 21", 21''' wird durch Hohlrohre des Regals 23 gebildet, wobei die Käfige 2 an den sprossenartig angeordneten Querleitungen 21''' angefügt sind, die durch senkrechte Hohlrohre, welche gleichzeitig als senkrechte Leitungen 21' und 21" der gemeinsamen Leitung 21 dienen, getragen werden. Diese leiterartig ausgestaltete gemeinsame Leitung 21 ist mit einer Lüftungseinheit 3 verbunden.

Diese Lüftungseinheit 3 weist nur eine Pumpe 4 mit einem Antrieb 5 auf und nicht zwei Pumpen und zwei Antriebe, wie dies beim eingangs genannten und weiterem bekannten Stand der Technik der Fall ist. Im dargestellten Ausführungsbeispiel ist der Luftauslaß 10 der Pumpe 4 mit einer Verbindungsleitung 13 verbunden, welche den Luftauslaß 10 der Pumpe 4 über die gemeinsame Leitung 21, 21', 21'', 21''' mit den Käfigen 2 verbindet. Die Förderrichtung der Pumpe 4 ist mit dem Pfeil 8 dargestellt und die Förderrichtung des Überdruckbetriebs in der Verbindungsleitung 13 und der gemeinsamen Leitung 21, 21', 21", 21''' mit dem Pfeil 6. Vorzugsweise mündet die Verbindungsleitung 13 derart in die gemeinsame Leitung 21, 21', 21", 21''' daß die beiden senkrechten Leitungen 21' und 21" durch den Überdruck beaufschlagt werden und ein größerer Druckabfall in den Querleitungen 21''' durch deren beidseitige Anbindung vermieden wird. Dasselbe gilt für den Unterdruck im Unterdruckbetrieb. Im Überdruckbetrieb wird die Luft durch den Lufteinlaß 9 der Pumpe 4 angesaugt, wobei an dieser Stelle ein Filter 17 angeordnet ist, der Verschmutzungen zurückhält. Ein Luftdurchsatz durch die Käfige 2 wird dadurch erzielt, daß diese Luftausgänge aufweisen. Diese Luftausgänge sind in Form von Filtern 24 ausgebildet, die sich in den Käfigdeckeln 28 befinden, um auch hier Verschmutzungen und Geruchsbelästigungen zurückzuhalten.

Die Lüftungseinheit 3 weist vorzugsweise einen Verschluß 15 an der Verbindungsleitung 13 auf, der derart ausgebildet sein kann, daß er auch als Regulierventil 36 dienend eine Druckminderung erzeugen kann. Auf diese Art und Weise läßt sich der erzeugte Überdruck oder im Unterdruckbetrieb der Unterdruck einstellen. Eine Druckanzeige 7 dient dazu, den im System befindlichen Druck abzulesen. Weiterhin dient eine grüne Diode 38 dazu, den Betrieb des Antriebs 5 mit der Pumpe 4 anzuzeigen, und eine rote Diode 38' dient zur Anzeige einer Störung.

Die **Fig. 1a** zeigt eine Lüftungseinheit 3 der oben beschriebenen Bauart im Unterdruckbetrieb. Dazu wird die Verbindungsleitung 13 vom Luftauslaß 10 der Pumpe 4 entfernt und, wie dargestellt, mit dem Lufteinlaß 9 der Pumpe 4 verbunden, nachdem der dort befindliche Filter 17 entfernt wurde. Diese jetzt den Lufteinlaß 9 mit den Käfigen 2 verbindende Leitung ist jetzt zur Verdeutlichung ihrer anderen funktionsmäßigen Anordnung mit dem Bezugszeichen 14 bezeichnet. Beim dadurch stattfindenden Unterdruckbetrieb wird die Förderrichtung in der Verbindungsleitung 14 durch den Pfeil 7 dargestellt. Es spielt dabei keine Rolle, in welcher Richtung die Förderrichtung 8 der Pumpe 4 geht, da am Lufteinlaß 9 auf jeden Fall Luft angesaugt wird. Bei dieser Betriebsart wird die in die Käfige 2 eintretende Luft durch an den Käfigen 2 angeordnete Filter 24 gefiltert. Der Luftauslaß 10 kann mit einer Luftentsorgung verbunden sein, welche die Luft gegebenenfalls von Verunreinigungen und/oder Infektionen befreit oder es kann ein Filter 18 angeordnet sein.

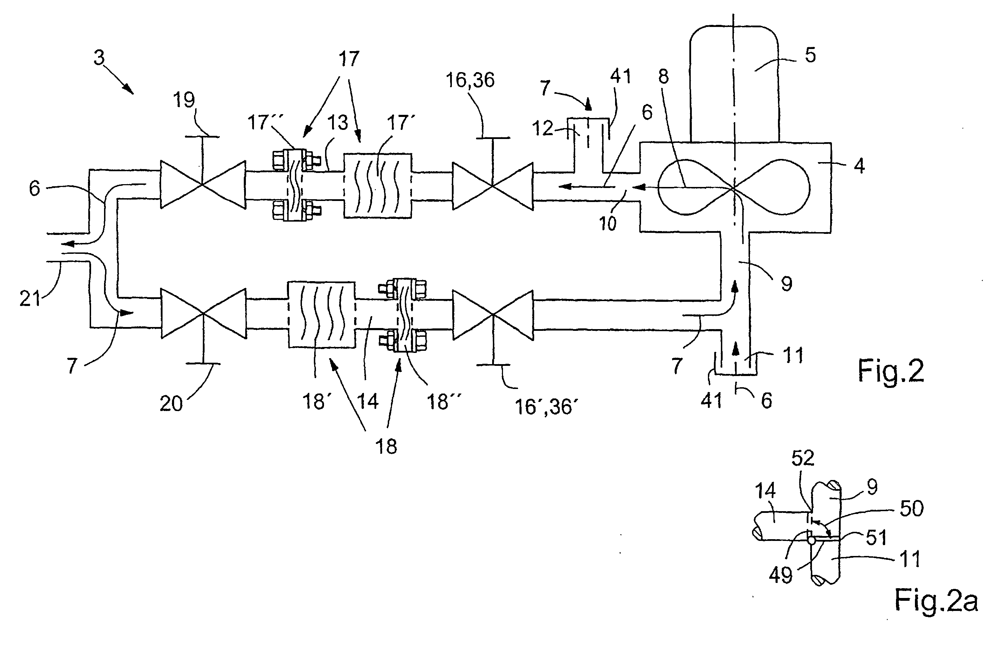

**Fig. 2** zeigt eine weitere Ausführungsform der Lüftungseinheit 3. Bei dieser Ausführungsform ist das Umstecken einer Leitung nicht mehr erforderlich. Die Umstellung zwischen Unterdruck- und Überdruckbetrieb kann durch die Betätigung von Verschlüssen 16, 16' und 41 erfolgen. Zu diesem Zweck ist eine Verbindungsleitung 13 mit dem Luftauslaß 10 der Pumpe 4 fest verknüpft, wobei die Leitung 13 als erstes eine verschließbare Öffnung 12 zur Außenluft aufweist und danach ist ein Verschluß 16, der auch hier gleichzeitig als Regulierventil 36 ausgebildet ist, angeordnet. An diesen Verschluß 16 schließt sich ein Filter 17 an, der aus einem in Förderrichtung 6 zuerst angeordneten Grobfilter 17' und einem danach folgenden Feinfilter 17" besteht. Ein weiterer Verschluß 19 dient dazu, die Filter 17, 17', 17" vom übrigen Leitungssystem abzutrennen. Danach mündet die Verbindungsleitung 13 in eine gemeinsame Leitung 21, in die auch eine Verbindungsleitung 14 mündet, die mit dem Lufteinlaß 9 der Pumpe 4 verbunden ist. Auch bei dieser Verbindungsleitung 14 folgt auf den Lufteinlaß 9 der Pumpe 4 die Anordnung einer verschließbaren Öffnung 11 zur Außenluft, welche beispielsweise - ebenso wie die vorgenannte verschließbare Öffnung 12 - mit einer Verschlußkappe 41 verschlossen werden kann. Nach dieser verschließbaren Öffnung 11 - das ist in diesem Fall entgegen der durch den Pfeil 7 angedeuteten Förderrichtung - ist ein Verschluß 16' angeordnet, der hier ebenfalls als Regulierventil 36 ausgebildet ist. Danach folgt ein Filter 18, der ebenfalls aus einem Grobfilter 18' und einem Feinfilter 18" besteht, die jedoch hier umgekehrt wie beim Filter 17 angeordnet sind, da auch die Förderrichtung 7 umgekehrt verläuft und der Grobfilter 18' zur Aufnahme grober Partikel vor dem Feinfilter 18" angeordnet sein muß. Auch bei der Leitung 14 ist zweckmäßigerweise ein weiterer Verschluß 20 angeordnet, um den Filter 18 vom übrigen Leitungssystem trennen zu können.

Die Funktionsweise ist folgende: Für den Überdruckbetrieb wird die Verbindungsleitung 14 durch Schließen des Verschlusses 16' oder auch des Verschlusses 20 gesperrt und die verschließbare Öffnung 11 geöffnet, indem die Verschlußkappe 41 von dieser entfernt wird. Die verschließbare Öffnung 12 wird verschlossen, indem über sie die Verschlußklappe 41 gestülpt wird. Weiterhin wird die Verbindungsleitung 13 durch Öffnen des Verschlusses 16' und des Verschlusses 19 geöffnet. Arbeitet nun die Pumpe 4 in der Förderrichtung des Pfeils 8, so werden die Verbindungsleitung 14 und die Leitungen 23, 23', 23", 23''' sowie die Käfige 2 mit einem Überdruck beaufschlagt, wobei die Luft aus den Käfigen 2 durch die Filter 24 entweicht. Letztere sind für die Entfernung von Verunreinigungen und Gerüchen ausgebildet.

Für den Unterdruckbetrieb wird die Verbindungsleitung 14 geöffnet, indem die Verschlüsse 16' und 20 geöffnet werden. Dann wird die verschließbare Öffnung 11 mittels der Verschlußkappe 41 verschlossen. Weiterhin wird die Verbindungsleitung 13 durch Verschließen des Verschlusses 16 oder des Verschlusses 19 verschlossen und die Verschlußkappe 41 von der Öffnung 12 entfernt. Wird nunmehr die Pumpe 4 in Betrieb gesetzt, so fördert sie in Richtung des Pfeils 8 die Luft, wobei diese in Richtung des ausgezogenen Pfeils 7 aus der Leitung 14, und damit auch aus dem Rohrleitungssystem und aus den Käfigen 2 gesaugt wird. In die Käfige 2 kann die Luft durch die Filter 24 nachströmen und wird dabei in erforderlicher Weise gereinigt. Diese Betriebsweise wird in Quarantänesituationen eingeschaltet, da bei dieser Betriebsweise keine Luft nach außen dringt. Zu diesem Zweck muß dann natürlich die verschließbare Öffnung 12, durch die die Luft in Richtung des gestrichelten Pfeils 7 entweicht, mit einer Luftentsorgung verbunden sein.

Alternativ zu den Verschlußkappen 41 können die verschließbaren Öffnungen 11 und 12 mit einem Dreiwegeventil verbunden werden, das je nach Einstellung dafür sorgt, daß eine der verschließbaren Öffnungen 11 und 12 verschlossen und die andere offen ist. Es kann auch eine Betätigungseinrichtung vorgesehen sein, welche das Dreiwegeventil und die Verschlüsse 16, 16' gleichzeitig in o.g. Weise betätigt.

**Fig. 2a** zeigt eine Teilansicht einer alternativen Ausführungsform, bei der die Leitung 14 durch eine Luftweiche 49 mit dem Lufteinlaß 9 der Pumpe 4 und mit der verschließbaren Öffnung 11 verbunden ist. Die Luftweiche 49 ist mittels der durch den Doppelpfeil 50 gezeigten Stellbewegung in eine Position 51 für den Unterdruckbetrieb und eine Position 52 für den Überdruckbetrieb verbringbar. Die Funktion entspricht der oben beschriebenen. Dabei übernimmt die Luftweiche 49 die Funktion des Verschlusses 16' und der Verschlußkappe 41, wobei in entsprechender Weise auch zwischen Verbindungsleitung 14, Luftauslaß 10 der Pumpe 4 und Öffnung 12 eine Luftweiche 49 angeordnet ist, welche immer die entgegengesetzte Schaltposition bezüglich der Öffnung der Verbindungsleitung 14 oder der Öffnung 12 aufweist. Auch diese Luftweiche 49 übernimmt dann die Funktionen des Verschlusses 16 und der Verschlußkappe 41 bezüglich der Öffnung 12. Weiterhin kann ein Stellmechanismus zur gemeinsamen Ausführung der Stellbewegungen vorgesehen sein.

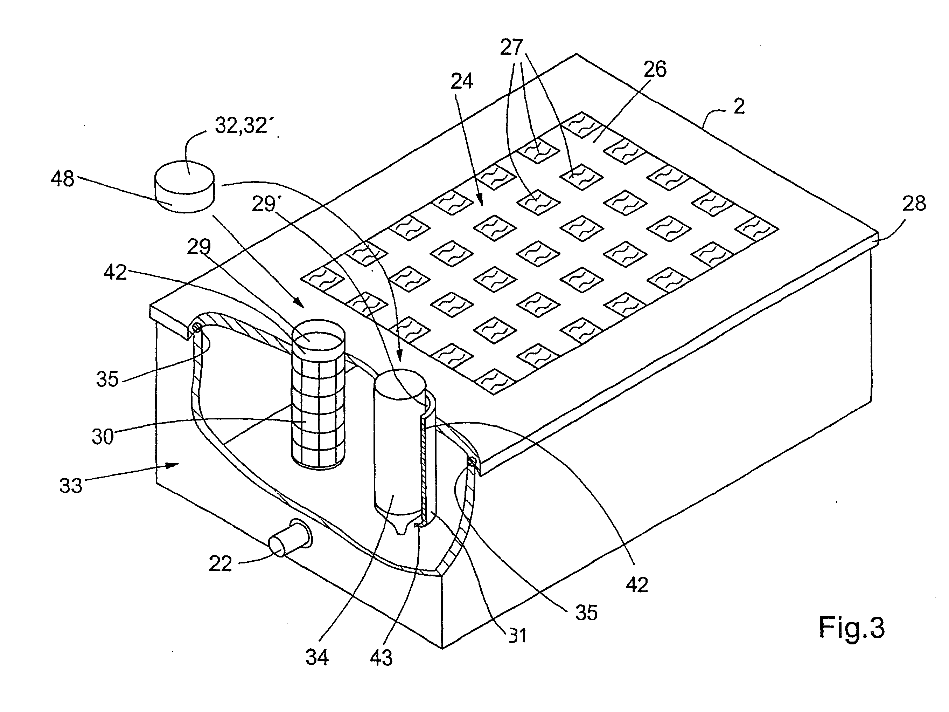

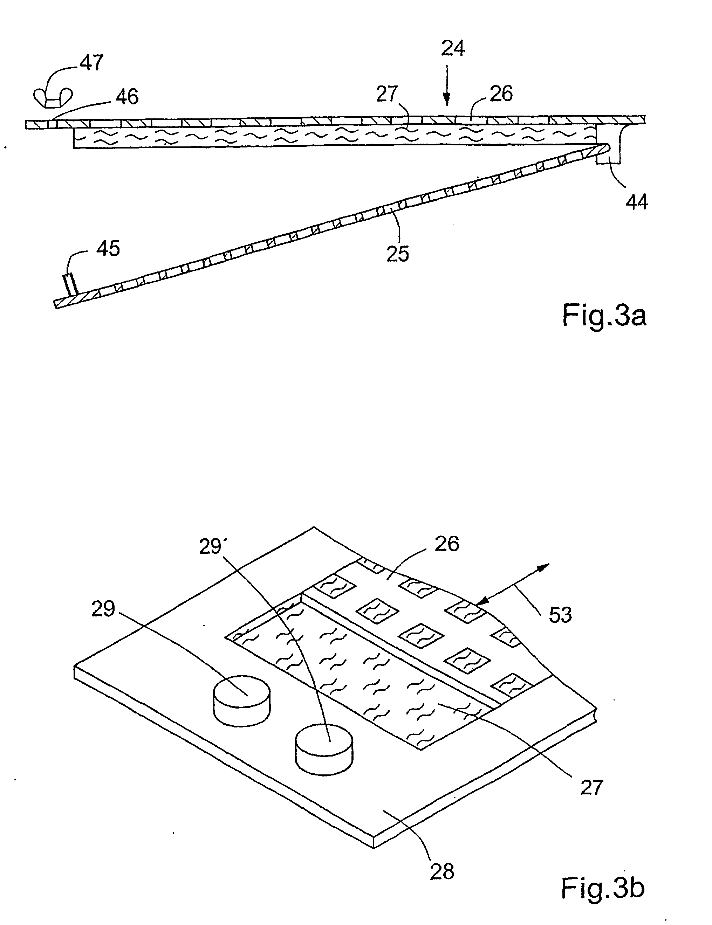

**Fig. 3** zeigt eine Ausgestaltungsmöglichkeit eines Käfigs 2 mit einem Filter 24. Der Filter 24 ist dabei am Käfigdeckel 28 angeordnet und großflächig ausgebildet. Damit die Luft auf jeden Fall durch den Filter 24 strömt, ist vorgesehen, daß der Käfigdeckel 28 mittels einer umlaufenden Dichtung 25 dicht mit dem übrigen Käfig 2 verbunden ist. Der Filter 24 besteht aus einer außenliegenden, durchbrochenen Platte 26, welche derart ausgebildet ist, daß sie möglichst eine große Öffnungsfläche aufweist. Darunter läßt sich das Filtermaterial 27 anordnen, welches nach der Innenseite des Käfigs 2 durch eine durchbrochene Platte 25 gehalten wird, welche zweckmäßigerweise als feinmaschiges Gitter ausgebildet ist, damit Nagetiere nicht das Filtermaterial 27 beschädigen können. Die dem Käfig zugewandte durchbrochene Platte 25 ist, wie in der **Fig. 3a** zu sehen ist, mittels einer Lagerung 44 schwenkbar gelagert, damit sich auf diese Weise das Filtermaterial 27 auswechseln läßt. Nach Aufnahme oder Auswechseln eines Filtermaterials 27 ist die durchbrochene Platte 25 mittels einer Schraube 45, einer Bohrung 46 und einer Mutter 47 befestigbar. Die **Fig. 3b** zeigt eine weitere Ausgestaltung eines Käfigdeckels 28 mit Filter 24, bei dem die durchbrochene Platte 26 in Richtung des Doppelpfeils 53 verschiebbar ist, um das Filtermaterial 27 wechseln zu können.

Die **Fig. 3** zeigt weiterhin eine Ausgestaltung eines Futtersilos 30 und eines Flaschensilos 31. Diese sind derart ausgebildet, daß sie weniger Fläche des Deckels 28 beanspruchen, wodurch mehr Fläche für den Filter 24 zur Verfügung steht. Die große Fläche gestattet die Ausbildung eines Filters 24, welcher einen guten Luftaustausch und einen geringen Strömungswiderstand bei guter Filterwirkung gewährleistet. Für die Anordnung des Futtersilos 30 und des Flaschensilos 31 unter Inanspruchnahme einer geringen Fläche des Käfigdeckels 28 sind zwei Durchbrechungen 29 und 29' in den Käfigdeckel 28 eingebracht, die sich im Bereich einer Stiruseite 33 des Käfigs 2 befinden. Dabei handelt es sich zweckmäßigerweise um runde Durchbrechungen 29, 29', welche Ränder 42 aufweisen, die mit einem konischen Sitz ausgestattet sind und die mit Verschlußdeckeln 32 und 32' zusammenwirken, die einen Verschlußdeckelrand 48 besitzen, der an der Innenseite den Gegenkonus für einen dichten Verschluß aufweist.

Das Futtersilo 30 besteht aus einem zylinderförmigen Gitter, das an die Durchbrechung 29 angefügt ist. Zur Halterung einer Flasche 34 ist an die Durchbrechung 29' ein Flaschensilo 31 angefügt, das an seiner unteren Seite einen Haltekragen 43 für die Halterung einer Flasche 34 aufweist. Dabei ist das Flaschensilo 31 mit einem Haltekragen 43 derart bemessen, daß der untere Teil der Flasche 34, der bei dieser Anordnung oben liegt, ergreifbar ist und dadurch die Flaschen 34 leicht ausgewechselt werden können. Der anzufügende Deckel 32' muß dann einen so hohen Verschlußdeckelrand 48 aufweisen, daß bei verschlossener Durchbrechung 29' der Verschlußdeckel 32' auf dem Rand 42 sitzt. Die Flasche 34 weist mit ihrer Öffnung nach unten, wobei diese derart ausgebildet ist, daß die Flüssigkeit nur beim Trinken der Tiere austritt.

Die Ausführungsbeispiele sind lediglich als mögliche Ausgestaltungen zu verstehen, da die Erfindung in verschiedenster Weise ausgebildet sein kann. Selbstverständlich ist es auch möglich, die Verschlüsse 16, 16', 19, 20 als automatisch betätigbare Verschlüsse auszugestalten, ebenso die Verschlüsse für die Öffnungen 11 und 12. Auch die Luftweichen 49 können mit einem Element zur gemeinsamen Betätigung - auch mit den Verschlüssen 16, 16' und/oder 19, 20 - ausgestattet sein. Es ist auch möglich durch Tasteneingabe mittels eines Mikroprozessors alles zu steuern, so daß der Benutzer nur noch per Knopfdruck vom Überdruckbetrieb auf den Unterdruckbetrieb oder umgekehrt umschalten muß und gegebenenfalls auch noch den entsprechenden Druck wählen kann. Auch ist es möglich, die Käfige 2 mit zwei Lufteinlässen 22 zur versehen und eine Leitung 13 als Zuleitung und eine andere Leitung 14 als Ableitung der Luft zur verwenden. Weitere Ausgestaltungsmöglichkeiten sind denkbar.

### Bezugszeichenliste

- 1: Käfig-Regalsystem
- 2: Käfige
- 3: Lüftungseinheit
- 4: Pumpe
- 5: Antrieb
- 6: Pfeil: Förderrichtung (Überdruckbetrieb)
- 7: Pfeil: Förderrichtung (Unterdruckbetrieb)
- 8: Pfeil: Förderrichtung der Pumpe
- 9: Lufteinlaß der Pumpe
- 10: Luftauslaß der Pumpe
- 11: verschließbare Öffnung zur Außenluft (Lufteinlaßseite der Pumpe)
- 12: verschließbare Öffnung zur Außenluft (Luftauslaßseite der Pumpe)
- 13: Verbindungsleitung Luftauslaß - Käfige
- 14: Verbindungsleitung Lufteinlaß - Käfige
- 15: Verschluß
- 16: Verschluß der Verbindungsleitung 13
- 16': Verschluß der Verbindungsleitung 14
- 17: Filter für Überdruckbetrieb
- 17': Grobfilter für Überdruckbetrieb
- 17": Feinfilter für Überdruckbetrieb
- 18: Filter für Unterdruckbetrieb
- 18': Grobfilter für Unterdruckbetrieb
- 18": Feinfilter für Unterdruckbetrieb
- 19: weiterer Verschluß der Verbindungsleitung 13
- 20: weiterer Verschluß der Verbindungsleitung 14
- 21: gemeinsame Leitung
- 21', 21": senkrechte Leitungen der gemeinsamen Leitung
- 21''': Querleitungen der gemeinsamen Leitung
- 22: Anschlüsse der Käfige
- 23: Regal
- 24: Filter der Käfige
- 25: durchbrochene Platte (dem Käfig zugewandt)
- 26: durchbrochene Platte (außenliegend)
- 27: Filtermaterial
- 28: Käfigdeckel
- 29, 29': Durchbrechungen der Käfigdeckel
- 30: Futtersilo
- 31: Flaschensilo
- 32, 32': Deckel zum Verschließen der Durchbrechung 29, 29'
- 33: Stirnseite der Käfige
- 34: Flasche
- 35: Umlaufende Dichtung
- 36, 36': Regulierventile
- 37: Druckanzeige
- 38, 38': Leuchtdioden
- 38: Diode (grün) - Betrieb des Motors
- 38': Diode (rot) - Störung
- 39: Trageholme für Käfige
- 40: Räder des Käfig-Regalsystems
- 41: Verschlußkappen
- 42: Rand mit konischem Sitz für Verschlußdeckel 32 oder 32'
- 43: Haltekragen für Flasche
- 44: Lagerung der durchbrochenen Platte 25
- 45: Schraube
- 46: Bohrung
- 47: Mutter
- 48: Verschlußdeckelrand
- 49: Luftweiche
- 50: Doppelpfeil: Stellbewegung der Luftweiche
- 51: Position für Unterdruckbetrieb
- 52: Position für Überdruckbetrieb
- 53: Doppelpfeil: Verschiebbarkeit der außenliegenden durchbrochenen Platte

## Patentansprüche

1. Käfig-Regalsystem (1) mit Zwangsbelüftung, wobei jeder Käfig (2) mit einer Lüftungseinheit (3) in Verbindung steht, welche derart ausgebildet ist, daß die Käfige (2) zur Lüftung im Unter- oder Überdruckbetrieb durchspült werden können und wobei die Lüftungseinheit (3) nur eine Pumpe (4) mit Antrieb (5) aufweist und derart ausgebildet ist, daß eine Förderrichtung (6 oder 7) in Richtung der Käfige (2) oder aus den Käfigen (2) heraus einstellbar ist,
**dadurch gekennzeichnet**,
die Lüftungseinheit (3) derart ausgebildet ist, daß die Käfige (2) wahlweise mit dem Lufteinlaß (9) oder dem Luftauslaß (10) der Pumpe (4) verbindbar sind.

2. Käfig-Regalsystem nach Anspruch 1,
**dadurch gekennzeichnet,**
**daß** die Pumpe (4) ein Radialgebläse ist.

3. Käfig-Regalsystem nach Anspruch 1 oder 2,
**dadurch gekennzeichnet,**
**daß** mindestens eine Verbindungsleitung (13, 14) zwischen der Pumpe (4) und den Käfigen (2) mindestens einen Filter (17, 17', 17" und 18, 18', 18") aufweist.

4. Käfig-Regalsystem nach Anspruch 1, 2 oder 3,
**dadurch gekennzeichnet,**
**daß** der Lufteinlaß (9) und der Luftauslaß (10) der Pumpe (4) jeweils mit einer verschließbaren Öffnung (11 und 12) zur Außenluft und jeweils mit einer zu den Käfigen (2) führenden Verbindungsleitung (13 und 14) verbunden ist, wobei die Verbindungsleitungen (13 und 14) jeweils einen Verschluß (16, 16') aufweisen.

5. Käfig-Regalsystem nach Anspruch 4,
**dadurch gekennzeichnet,**
**daß** in der jeweiligen Förderrichtung (6, 7) zuerst ein Grobfilter (17', 18') und nachfolgend ein Feinfilter (17", 18") angeordnet ist.

6. Käfig-Regalsystem nach einem der Ansprüche 2 bis 5,
**dadurch gekennzeichnet,**
**daß** an der mindestens einen Verbindungsleitungen (13, 14) ein weiterer Verschluß (19 und/oder 20) angeordnet sind, derart, daß die Filter (17, 17', 17" und 18, 18', 18") durch die Verschlüsse (16, 16', 19, 20) beidseitig vom Leitungssystem trennbar sind.

7. Käfig-Regalsystem nach Anspruch 4, 5 oder 6,
**dadurch gekennzeichnet,**
**daß** die Verbindungsleitungen (13 und 14) in eine gemeinsame, zu den Käfigen (2) führende Leitung (21, 21', 21", 21''') münden.

8. Käfig-Regalsystem nach Anspruch 7,
**dadurch gekennzeichnet,**
**daß** die gemeinsame Leitung (21, 21', 21", 21''') sich in zwei senkrechte Leitungen (21', 21") verzweigt, zwischen denen sprossenartig Querleitungen (21''') eingefügt sind, an welchen sich die Anschlüsse (22) für die Käfige (2) befinden.

9. Käfig-Regalsystem nach Anspruch 8,
**dadurch gekennzeichnet,**
**daß** das Regal (23) aus Hohlrohren besteht, welche als gemeinsame Leitungen (21, 21', 21", 21''') dienen.

10. Käfig-Regalsystem nach einem der Ansprüche 1 bis 9
**dadurch gekennzeichnet,**
**daß** die Anschlüsse (22) der Käfige (2) an das Lüftungssystem Verschlußkupplungen sind.

11. Käfig-Regalsystem nach einem der Ansprüche 1 bis 10,
**dadurch gekennzeichnet,**
**daß** die Käfige (2) über Filter (24) mit der Außenluft in Verbindung stehen.

12. Käfig-Regalsystem nach Anspruch 11,
**dadurch gekennzeichnet,**
**daß** die Filter (24) großflächige Deckelfilter sind.

13. Käfig-Regalsystem nach Anspruch 12,
**dadurch gekennzeichnet,**
**daß** die Filter (24) aus zwei durchbrochenen Platten (25, 26) bestehen, zwischen die ein Filtermaterial (27) einfügbar ist.

14. Käfig-Regalsystem nach Anspruch 13,
**dadurch gekennzeichnet,**
**daß** eine der durchbrochenen Platten (25, 26) zur Einfügung des Filtermaterials (27) wegbewegbar ausgebildet ist.

15. Käfig-Regalsystem nach Anspruch 13 oder 14,
**dadurch gekennzeichnet,**
**daß** die dem Käfig (2) zugewandte Platte (25) als feinmaschiges Gitter ausgebildet ist und die Durchbrechungen der außenliegenden Platte (26) einen möglichst großen Flächenanteil aufweisen.

16. Käfig-Regalsystem nach einem der Ansprüche 12 bis 15,
**dadurch gekennzeichnet,**
**daß** die Käfigdeckel (28) der Käfige (2) zwei Durchbrechungen (29, 29') aufweisen, wobei an der Käfiginnenseite einer Durchbrechung (29) ein Futtersilo (30) und an die andere Durchbrechung (29') ein Flaschensilo (31) angefügt ist, und daß die Durchbrechungen (29, 29') durch Deckel (32, 32') verschließbar sind.

17. Käfig-Regalsystem nach Anspruch 16,
**dadurch gekennzeichnet,**
**daß** die Deckel (32, 32') als Metalldeckel mit einem konischen, dicht schließenden Sitz (42) ausgebildet sind.

18. Käfig-Regalsystem nach Anspruch 16 oder 17,
**dadurch gekennzeichnet,**
**daß** das Futtersilo (30) und das Flaschensilo (31) sichtbar an einer Stirnseite (33) der Käfige (2) angeordnet sind.

19. Käfig-Regalsystem nach Anspruch 16, 17 oder 18,
**dadurch gekennzeichnet,**
**daß** das Flaschensilo (31) für eine senkrechte Flaschenpositionierung ausgebildet ist, wobei die Ausgestaltung des Flaschensilos (31) derart mit den einzufügenden Flaschen (34) abgestimmt ist, daß letztere im Bereich ihres nach oben zeigenden Bodens ergriffen werden können.

20. Käfig-Regalsystem nach einem der Ansprüche 1 bis 19,
**dadurch gekennzeichnet,**
**daß** die Käfigdeckel (28) in ihrem Auflagebereich eine umlaufende Dichtung (35) aufweisen.

21. Käfig-Regalsystem nach einem der Ansprüche 1 bis 20,
**dadurch gekennzeichnet,**
**daß** die Lüftungseinheit (3) im unteren Bereich des Regals (23) angeordnet ist.

22. Käfig-Regalsystem nach einem der Ansprüche 1 bis 21,
**dadurch gekennzeichnet,**
**daß** die Lüftungseinheit (3) mit mindestens einem Regulierventil (36, 36') ausgestattet ist.

23. Käfig-Regalsystem nach einem der Ansprüche 1 bis 22,
**dadurch gekennzeichnet,**
**daß** mindestens ein Anzeigeelement (37, 38, 38') vorgeschen ist.

## Claims

1. A cage-shelving system (1) with forced aeration, in which each cage (2) is connected to a ventilating unit (3) which is designed such that the cages (2) can be purged under subatmospheric or superatmospheric pressure, and in which the ventilating unit (3) has only one pump (4) plus drive (5) and is designed such that a direction of transport (6 or 7) can be adjusted for movement towards the cages (2) or away from the cages (2), **characterized in that** the ventilating unit (3) is designed such that the cages (2) can be optionally connected to the air inlet (9) or the air outlet (10) of the pump (4) .

2. A cage-shelving system as defined in claim 1, **characterized in that** the pump (4) is a centrifugal fan.

3. A cage-shelving system as defined in claim 1 or claim 2, **characterized in that** at least one connecting pipe (13, 14) between the pump (4) and the cages (2) exhibits at least one filter (17, 17', 17" and 18, 18', 18").

4. A cage-shelving system as defined in claim 1, 2 or 3, **characterized in that** the air inlet (9) and the air outlet (10) of the pump (4) are each connected to a closable orifice (11 and 12) leading to the atmospheric air and to a connecting pipe (13 and 14) leading to the cages (2), and each of said connecting pipes (13 and 14) has a closing device (16, 16').

5. A cage-shelving system as defined in claim 4, **characterized in that** in each direction of transport (6, 7) there is provided first a coarse filter (17', 18') followed by a fine filter (17", 18").

6. A cage-shelving system as defined in any one of claims 2 to 5, **characterized in that** to at least one of the connecting pipes (13, 14) there is attached another closing device (19 and/or 20) such that the filters (17, 17', 17" and 18, 18', 18") can be separated from the piping system at both ends by the closing devices (16, 16', 19, 20).

7. A cage-shelving system as defined in claim 4, 5 or 6, **characterized in that** the connecting pipes (13 and 14) open into a common line (21, 21', 21", 21''') leading to the cages (2).

8. A cage-shelving system as defined in claim 7, **characterized in that** the common line (21, 21', 21 ", 21 "') branches to form two vertical pipelines (21', 21"), between which transverse pipes (21''') are connected like rungs, in which the connectors (22) for the cages (2) are located.

9. A cage-shelving system as defined in claim 8, **characterized in that** the shelf (23) is composed of hollow tubes, which serve as common line (21.21', 21", 21"').

10. A cage-shelving system as defined in any one of claims 1 to 9, **characterized in that** the connectors (22) between the cages (2) and the ventilating system are shut-off couplings.

11. A cage-shelving system as defined in any one of claims 1 to 10, **characterized in that** the cages (2) are connected to the atmospheric air via filters (24).

12. A cage-shelving system as defined in claim 11, **characterized in that** the filters (24) are large-area lid filters.

13. A cage-shelving system as defined in claim 12, **characterized in that** the filters (24) consist of two perforated plates (25, 26), between which a filter medium (27) can be placed.

14. A cage-shelving system as defined in claim 13, **characterized in that** one of the perforated plates (25, 26) can be moved aside for insertion of the filter medium (27).

15. A cage-shelving system as defined in claim 13 or claim 14, **characterized in that** the plate (25) facing the cage (2) is in the form of a fine-mesh screen and the holes in the outward plate (26) have as large an area as possible.

16. A cage-shelving system as defined in any one of claims 12 to 15, **characterized in that** the cage lids (28) of the cages (2) exhibit two holes (29, 29'), and, in the cage interior, a fodder silo (30) is mounted over one hole (29) and a bottle silo (31) is mounted over the other hole (29'), and that the holes (29, 29') are closable by lids (32, 32').

17. A cage-shelving system as defined in claim 16, **characterized in that** the lid (32, 32') is in the form of a metal lid having a conical, tight-fitting seat (42).

18. A cage-shelving system as defined in claim 16 or claim 17, **characterized in that** the fodder silo (30) and the bottle silo (31) are visibly disposed at one end (33) of the cage (2).

19. A cage-shelving system as defined in claim 16, 17, or 18, **characterized in that** the bottle silo (31) is adapted to provide a vertical bottle position, and the design of the bottle silo (31) is such that the bottle (34) inserted therein can be grasped in the region of its up-turned bottom.

20. A cage-shelving system as defined in any one of claims 1 to 19, **characterized in that** the cage lids (28) have a peripheral gasket (35) in the bearing region thereof.

21. A cage-shelving system as defined in any one of claims 1 to 20, **characterized in that** the ventilating unit (3) is disposed in the lower region of the shelf (23).

22. A cage-shelving system as defined in any one of claims 1 to 21, **characterized in that** the ventilating unit (3) is equipped with at least one regulating valve (36, 36').

23. A cage-shelving system as defined in any one of claims 1 to 22, **characterized in that** at least one display unit (37, 38, 38') is provided.

## Revendications

1. Système de rayonnage (1) pour cages avec une ventilation forcée, chaque cage (2) étant reliée à une unité de ventilation (3), laquelle est réalisée de sorte que les cages (2) puissent être balayées pour la ventilation en mode de dépression ou de surpression et l'unité de ventilation (3) ne présentant qu'une pompe (4) avec moteur (5) et étant réalisée de sorte qu'un dispositif de transport (6 ou 7) puisse être réglé en direction des cages (2) ou depuis les cages (2),**caractérisé en ce que** l'unité de ventilation (3) est réalisée de sorte que les cages (2) puissent être reliées au choix à l'entrée d'air (9) ou à la sortie d'air (10) de la pompe (4).

2. Système de rayonnage pour cage selon la revendication 1, **caractérisé en ce que** la pompe (4) est un ventilateur radial.

3. Système de rayonnage pour cage selon la revendication 1 ou 2, **caractérisé en ce qu'**au moins une conduite de connexion (13, 14) entre la pompe (4) et les cages (2) présente au moins un filtre (17, 17', 17" et 18, 18', 18").

4. Système de rayonnage pour cage selon la revendication 1, 2 ou 3, **caractérisé en ce que** l'entrée d'air (9) et la sortie d'air (10) de la pompe (4) sont reliées respectivement à une ouverture refermable (11) et (12) communiquant avec l'air extérieur et respectivement à une conduite de connexion (13 et 14) reliée aux cages (2), les conduites de connexion (13 et 14) présentant respectivement une fermeture (16, 16').

5. Système de rayonnage pour cage selon la revendication 4, **caractérisé en ce que** un filtre grossier (17', 18') suivi d'un filtre fin (17", 18") est disposé dans le dispositif de transport respectif (6, 7).

6. Système de rayonnage pour cage selon l'une des revendications 2 à 5, **caractérisé en ce qu'**au moins sur l'une des conduites de connexion (13, 14), on a disposé une autre fermeture (19 et/ou 20) de sorte que les filtres (17, 17', 17" et 18, 18', 18") puissent être isolés de part et d'autre du système de canalisation par les obturateurs (16; 16', 19, 20).

7. Système de rayonnage pour cage selon la revendication 4, 5 ou 6, **caractérisé en ce que** les conduites de connexion (13 et 14) débouchent dans une conduite commune (21, 21', 21", 21''') reliée aux cages (2).

8. Système de rayonnage pour cage selon la revendication 7, **caractérisé en ce que** la conduite commune (21, 21', 21", 21''') se ramifie en deux conduites verticales (21', 21"), entre lesquelles sont insérées à la manière de barreaux d'échelle des conduites transversales (21''') sur lesquelles se trouvent les raccordements (22) pour les cages (2).

9. Système de rayonnage pour cage selon la revendication 8, **caractérisé en ce que** le rayonnage (23) se compose de tubes creux qui servent de conduites communes (21, 21', 21", 21''').

10. Système de rayonnage pour cage selon l'une des revendications 1 à 9, **caractérisé en ce que** les raccordements (22) des cages (2) au système de ventilation sont des obturateurs express.

11. Système de rayonnage pour cage selon l'une des revendications 1 à 10, **caractérisé en ce que** les cages (2) sont reliées à l'air extérieur par des filtres (24).

12. Système de rayonnage pour cage selon la revendication 11, **caractérisé en ce que** les filtres (24) sont des filtres étendus formant couvercle.

13. Système de rayonnage pour cage selon la revendication 12, **caractérisé en ce que** les filtres (24) se composent de deux plaques perforées (25, 26) entre lesquelles est inséré un matériau filtrant (27).

14. Système de rayonnage pour cage selon la revendication 13, **caractérisé en ce que** l'une des plaques perforées (25, 26) est réalisée pour l'insertion du matériau filtrant (27) de manière amovible.

15. Système de rayonnage pour cage selon la revendication 13 ou 14, **caractérisé en ce que** la plaque (25) tournée vers la cage (2) est réalisée comme une grille à maillage fin et les perforations de la plaque externe (26) présentent une surface la plus grande possible.

16. Système de rayonnage pour cage selon l'une des revendications 12 à 15, **caractérisé en ce que** les couvercles de cage (28) des cages (2) présentent deux perforations (29, 29'), sur la face intérieure d'une des perforations (29), un réservoir à aliments (30) étant rajouté et sur l'autre perforation (29') un réservoir à eau (31) et **en ce que** les perforations (29, 29') sont refermables par des couvercles (32, 32") .

17. Système de rayonnage pour cage selon la revendication 17, **caractérisé en ce que** les couvercles (32, 32') sont réalisés comme des couvercles métalliques avec un siège conique (42) fermé de manière étanche.

18. Système de rayonnage pour cage selon la revendication 16 ou 17, **caractérisé en ce que** le réservoir à aliment (30) et le réservoir à eau (31) sont visibles sur une face avant (33) des cages (2).

19. Système de rayonnage pour cage selon la revendication 16, 17, ou 18, **caractérisé en ce que** le réservoir à boisson (31) est réalisé pour un positionnement vertical des bouteilles à eau, l'agencement du réservoir à eau (31) étant adapté aux bouteilles à insérer (34) de sorte que ces dernières puissent être saisies dans la zone de leur fonds dirigés vers le haut.

20. Système de rayonnage pour cage selon l'une des revendications 1 à 19, **caractérisé en ce que** les couvercles de cage (28) présentent dans sa zone d'application une garniture d'étanchéité circulaire (35).

21. Système de rayonnage pour cage selon l'une des revendications 1 à 20, **caractérisé en ce que** l'unité de ventilation (3) est disposée dans la zone inférieure du rayonnage (23).

22. Système de rayonnage pour cage selon l'une des revendications 1 à 21, **caractérisé en ce que** l'unité de ventilation (3) est munie d'au moins une soupape de régulation (36, 36').

23. Système de rayonnage pour cage selon l'une des revendications 1 à 22, **caractérisé en ce qu'**au moins un élément d'affichage (37, 38, 38') est prévu.
